# FASCICULE DE BREVET EUROPEEN

(11) **EP 0 969 175 B1**
(45) Date de publication et mention de la délivrance du brevet: **12.11.2003**
(21) Numéro de dépôt: 99401608.7
(22) Date de dépôt: 28.06.1999
(51) Int. Cl.: E05F 15/16, H02K 7/116

(54) **Motoréducteur d'activation d'un organe fonctionnel de véhicule automobile**
Getriebemotor zum Antrieb eines Kraftfahrzeug-Funktionselements
Geared motor drive for a function device of a motor vehicle

(30) Priorité: 29.06.1998 FR 9808243
(43) Date de publication de la demande: 05.01.2000
(73) Titulaire: ArvinMeritor Light Vehicle Systems-France, 45600 Sully sur Loire (FR)
(72) Inventeur: Nomerange, Hervé, 14000 Caen (FR)
(74) Mandataire: Habasque, Etienne Joel Jean-François

(56) Documents cités:
- EP-A- 0 869 295
- DE-A- 3 815 356
- GB-A- 2 016 213

## Description

La présente invention concerne un motoréducteur d'activation d'un organe fonctionnel de véhicule automobile.

Plus particulièrement, l'invention se rapporte à un tel motoréducteur qui comporte une portion de moteur et une portion de réducteur à roue et vis sans fin, dont la vis est associée à l'arbre du moteur, et trois paliers de guidage de ceux-ci, dont les deux premiers sont disposés de part et d'autre de la portion de moteur et le troisième est disposé à l'extrémité de la vis, opposée à la portion de moteur (voir par exemple DE-A-3 815 356 ou GB-A-2 016 213).

De tels motoréducteurs entrent par exemple dans la constitution de mécanismes de lève-vitre de véhicule automobile.

Cependant, la structure de ces motoréducteurs présente un certain nombre d'inconvénients, car il est extrêmement difficile d'obtenir un alignement parfait des trois paliers lors de leur montage.

Ce défaut d'alignement provoque des bruits de fonctionnement et des frottements se traduisant par une réduction des performances du motoréducteur.

Le but de l'invention est donc de résoudre ces problèmes.

A cet effet, l'invention a pour objet un motoréducteur d'activation d'un organe fonctionnel de véhicule automobile, du type comportant une portion de moteur et une portion de réducteur à roue et vis sans fin, dont la vis est associée à l'arbre du moteur et trois paliers de guidage de ceux-ci, dont les deux premiers sont disposés de part et d'autre de la portion de moteur et le troisième est disposé à l'extrémité de la vis opposée à la portion de moteur, caractérisé en ce que les surfaces de contact complémentaires entre la vis et le palier du troisième palier et/ou de la vis présentent une section bombée.

L'invention sera mieux comprise à l'aide de la description qui va suivre, donnée uniquement à titre d'exemple et faite en se référant aux dessins annexés, sur lesquels :
- la Fig.1 représente une vue en coupe schématique d'un premier exemple de réalisation d'un motoréducteur d'activation selon l'invention; et
- la Fig.2 représente une vue en coupe schématique d'un second exemple de réalisation d'un motoréducteur d'activation selon l'invention.

On reconnaît en effet sur ces figures, un motoréducteur désigné par la référence générale 1, permettant l'activation d'un organe fonctionnel de véhicule automobile, comme par exemple d'un mécanisme de lève-vitre.

De façon classique, un tel motoréducteur comporte une portion de moteur désignée par la référence générale 2 et une portion de réducteur à roue et vis sans fin désignée par la référence générale 3. La roue de ce mécanisme est désignée par la référence générale 4, tandis que la vis de celui-ci est désignée par la référence générale 5 et est associée à l'arbre du moteur, désigné par la référence générale 6.

On notera que cette vis sans fin et cet arbre peuvent être réalisés sous la forme de deux pièces distinctes l'une de l'autre ou sous la forme d'une seule pièce.

Par ailleurs, trois paliers de guidage de ceux-ci sont également prévus dans un tel motoréducteur, les deux premiers paliers désignés par les références générales 7 et 8, étant disposés de part et d'autre de la portion de moteur 2, tandis que le troisième palier désigné par la référence générale 9, est disposé à l'extrémité de la vis 5 opposée à la portion de moteur 2.

Selon l'invention, les surfaces de contact complémentaires du troisième palier 9 et/ou de la vis 5, c'est-à-dire les surfaces 9a et 5a respectivement, présentent une section bombée.

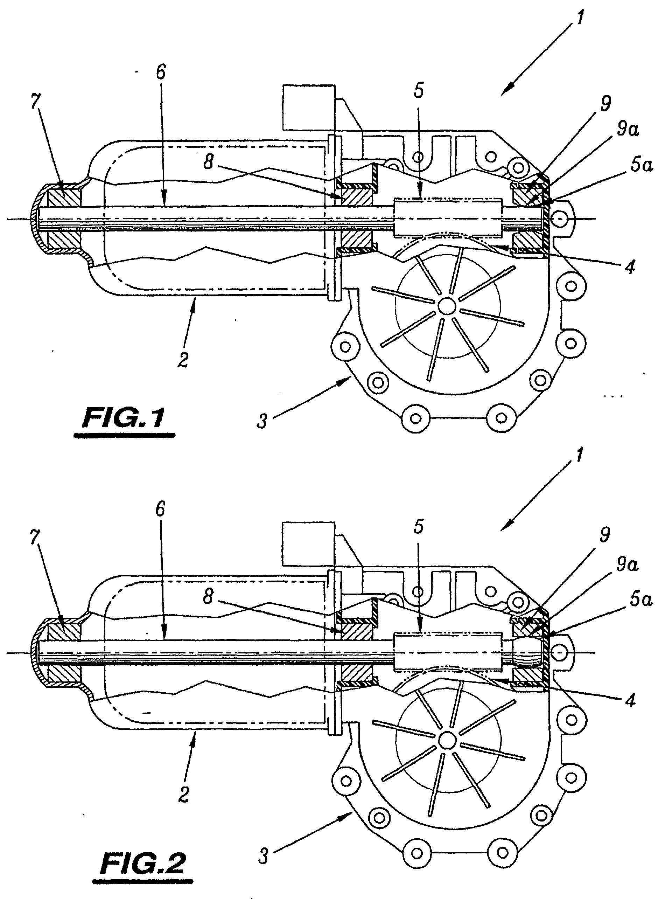

C'est ainsi par exemple que sur la figure 1, la surface de contact 9a du troisième palier 9 est bombée, tandis que sur la figure 2, c'est la surface de contact complémentaire 5a de la vis 5 qui est bombée.

Ceci permet de résoudre les problèmes de défaut d'alignement mentionnés précédemment et également de réduire les problèmes liés à la déformation de l'arbre, par exemple à couple bloqué.

Il va de soi bien entendu que différents modes de réalisation de ces surfaces de contact peuvent être envisagés.

## Revendications

1. Motoréducteur d'activation d'un organe fonctionnel de véhicule automobile, du type comportant une portion de moteur (2) et une portion de réducteur (3) à roue (4) et vis sans fin (5), dont la vis (5) est associée à l'arbre (6) du moteur et trois paliers (7,8,9) de guidage de ceux-ci, dont les deux premiers (7,8) sont disposés de part et d'autre de la portion de moteur (2) et le troisième (9) est disposé à l'extrémité de la vis (5) opposée à la portion de moteur, **caractérisé en ce que** les surfaces de contact complémentaires (9a,5a) entre la vis et le palier du troisième palier (9) et/ou de la vis (5) présentent une section bombée.

## Patentansprüche

1. Getriebemotor zum Antrieb eines Kraftfahrzeug-Funktionselements, umfassend einen Motorteil (2) und einen Untersetzungsgetriebeteil (3) mit Rad (4) und Schnecke (5), dessen Schnecke (5) der Welle (6) des Motors zugeordnet ist, und drei Lager (7, 8, 9) zu deren Führung, von denen die beiden ersten (7, 8) zu beiden Seiten des Motorteils (2) angeordnet sind und das dritte (9) an dem dem Motorteil entgegengesetzten Ende der Schnecke (5) angeordnet ist, **dadurch gekennzeichnet, daß** die komplementären Kontaktflächen (9a, 5a), zwischen der Schnecke und dem Lager, des dritten Lagers (9) und/oder der Schnecke (5) einen gewölbten Querschnitt aufweisen.

## Claims

1. Geared motor for actuation of a functional element of a motor vehicle, of the type comprising a motor portion (2) and a gear portion (3) with a wheel (4) and worm (5), of which the worm is associated with the shaft (6) of the motor and three bearings (7, 8, 9) for guiding the latter, of which the first two (7, 8) are disposed on either side of the motor portion (2) and the third (9) is disposed at the opposite end of the worm (5) to the motor portion, **characterised in that** the complementary contact surfaces (9a, 5a) between the worm and the bearing of the third bearing (9) and/or of the worm (5) have a bowed cross-section.
